## Europäisches Patentamt
## European Patent Office
## Office européen des brevets

(19)

(11) Veröffentlichungsnummer: **0 045 986**
**B1**

(12) EUROPÄISCHE PATENTSCHRIFT

(45) Veröffentlichungstag der Patentschrift:
16.05.84

(51) Int. Cl.³: **B 23 K 15/00**

(21) Anmeldenummer: **81200772.2**

(22) Anmeldetag: **07.07.81**

(54) Verfahren zum rissfreien Energiestrahlschweissen von warmfesten Formteilen.

(30) Priorität: **13.08.80 DE 3030532**

(43) Veröffentlichungstag der Anmeldung:
**17.02.82 Patentblatt 82/7**

(45) Bekanntmachung des Hinweises auf die Patenterteilung:
**16.05.84 Patentblatt 84/20**

(84) Benannte Vertragsstaaten:
**CH DE GB LI NL**

(56) Entgegenhaltungen:
**DE - A - 2 135 667**

(73) Patentinhaber: **BBC Aktiengesellschaft Brown, Boveri & Cie., Haselstrasse, CH-5401 Baden (CH)**

(72) Erfinder: **Jahnke, Bernd, Dr., Adalbert Seifriz-Strasse 10, D-6903 Neckargemünd (DE)**

(74) Vertreter: **Kempe, Wolfgang, Dr. et al, Postfach 1273, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

### Verfahren zum rißfreien Energiestrahlschweißen von warmfesten Formteilen

Die Erfindung bezieht sich auf ein Verfahren gemäß dem Oberbegriff des Patentanspruches 1.

Aus der DE-OS 21 35 667 ist ein Verfahren zum Herstellen von Werkstücken mittels Elektronenstrahlschweißung bekannt. Vor dem Verschweißen werden die miteinander zu verbindenden Werkstücke auf eine vorgebbare Temperatur erwärmt. Hierdurch soll erreicht werden, daß die Bildung von unerwünschten martensithaltigen Phasen vermieden wird. Dieses Verfahren ist jedoch für das Verbinden von Formteilen aus Superlegierungen auf der Basis von Nickel und Kobalt ungeeignet, da hierbei keine martensithaltigen Phasen beim Verschweißen gebildet werden.

Des weiteren ist ein Verfahren bekannt, bei dem Formteile aus Superlegierungen derart zusammengefügt werden, daß zwischen die zu verschweißenden Flächen eine dünne Einlage aus Stahl mit hohem Eisenanteil eingefügt wird. Hierdurch wird zwar eine im wesentlichen rißfreie Verbindung ermöglicht, jedoch besteht die Gefahr eines Festigkeitsverlustes. Durch die Verschiedenheit der Werkstoffe von Einlage und Formteil ergibt sich oft eine unerwünschte Zusammensetzung der Schweißnaht. Dies ist insbesondere bei der Verschweißung von hoch belasteten Formteilen von Turbinen nachteilig, die hohen thermischen und korrosiven Belastungen ausgesetzt sind, wie es beispielsweise bei Turbinenschaufeln und Turbinenbauteilen von Gasturbinen der Fall ist.

Der Erfindung liegt deshalb die Aufgabe zugrunde, ein Verfahren anzugeben, mit dem Formteile aus Superlegierungen mittels Elektronenstrahlschweißen rißfrei verbunden werden können, so daß ihre Festigkeitswerte und ihre Korrosionsbeständigkeit sich nur unwesentlich von den Festigkeitswerten und der Korrosionsbeständigkeit der Formteile unterscheiden und die Zusammensetzung des Erstarrungsgefüges in der Schweißnaht der Zusammensetzung der Formteile entspricht.

Diese Aufgabe wird erfindungsgemäß durch die kennzeichnenden Merkmale des Patentanspruches 1 gelöst.

Die Formteile können also ohne Zusatzwerkstoffe mit Hilfe des Energiestrahls, vorzugsweise eines Elektronenstrahls verschweißt werden, wobei Zusatzwerkstoffe gegebenenfalls zur Optimierung der Schweißnaht zugesetzt werden können. Hierbei bewirkt die gleichmäßige Durchwärmung der Formteile, daß keine Risse oder Poren auftreten können. Es hat sich gezeigt, daß eine Vorwärmung über eine Zeitdauer von etwa 10 bis 30 Minuten, vorzugsweise 20 Minuten, in den meisten Fällen ausreichend ist. Hierbei ist der Vorwärmbereich ausreichend groß zu wählen, das heißt, er muß so groß sein, daß an seinen Grenzen beim Aufheizen und Abkühlen keine nachteiligen Gefügeveränderungen auftreten können. Unter diesem Gesichtspunkt ist es daher in vielen Fällen erforderlich, die Formteile in ihrer gesamten Größe auf die Vorwärmtemperatur zu bringen.

Ebenso wichtig ist die gleichmäßige Abkühlung der Schweißzone und des angrenzenden Bereichs nach der Verschweißung.

Wie Untersuchungen an Verschweißungen mit dem erfindungsgemäßen Verfahren ergaben, sind die Schweißnähte und deren Bereich nach dem Erkalten und gegebenenfalls vom Hersteller der Werkstoffe vorgeschriebenen Wärmebehandlungen wie zum Beispiel Altern, riß- und porenfrei, die Streckgrenze und Wechselfestigkeit des Ausgangsmaterials wird erreicht.

Um Rißbildungen und Gefügeveränderungen mit Sicherheit auszuschließen, ist es gemäß einer besonders bevorzugten Weiterbildung der Erfindung empfehlenswert, daß die Formteile insgesamt auf Vorwärmtemperatur erwärmt werden.

Bestehen die Formteile aus Werkstoffen, für die vom Hersteller ein Lösungsglühen vorgeschrieben ist, so werden die Formteile vorteilhaft auf eine Vorwärmtemperatur gebracht, die nicht tiefer als 30°C unter Lösungsglühtemperatur liegt. Höhere Werte sind natürlich zugelassen.

Selbstverständlich darf die Erwärmung nicht beliebig hoch getrieben werden. Grenzen sind durch die Schmelztemperatur (Solidustemperatur) der Formteile gesetzt, die bei der Erwärmung nicht erreicht werden darf.

Als bevorzugter Richtwert kann gelten, daß ein Bereich von etwa 100°C über Lösungsglühtemperatur beim Vorwärmen der Formteile nicht überschritten werden sollte.

Die Formteile werden vorzugsweise gemäß jenen Vorschriften abgekühlt, welche der Hersteller des Werkstoffes für das Abkühlen nach dem Lösungsglühen angibt. Hierdurch wird gewährleistet, daß keinerlei Verschlechterung der mechanischen Eigenschaften der Formteile auftritt. Gleichzeitig ist ein weiterer Vorteil gegeben, der darin besteht, daß das für gegossene Werkstoffe ohnehin vorgesehene Lösungsglühen durch die Wärmebehandlung beim Schweißvorgang ersetzt werden kann und somit der Gesamtaufwand wesentlich verringert wird.

Unter dem Begriff Lösungsglühen versteht man ein Glühen mit einer Temperatur wenig oberhalb der Löslichkeitslinie einer ausscheidungsfähigen Legierung. Die zugehörige Lösungsglühtemperatur ist von Werkstoff zu Werkstoff verschieden und wird von den Herstellern solcher Werkstoffe angegeben. Ebenso angegeben werden die Bedingungen, mit welcher Formteile nach dem Lösungsglühen auf Raumtemperatur abgekühlt werden dürfen, um die Festigkeitseigenschaften nicht zu verändern.

Repräsentative Superlegierungen, die mit dem erfindungsgemäßen Verfahren verschweißbar sind, enthalten Chrom 5 bis 24%, Molybdän bis 11%, Niob bis 2%, Tantal und Niob bis 7%, Kobalt bis 22%, Titan bis 6%, Aluminium bis 7%, Kohlenstoff 0,01 bis 0,5%, Beryllium 0,001 bis 0,2%, Zirkonium bis 0,3%, Hafnium bis 2%, Eisen bis 6% und Wolfram bis 12% (Angaben in Gewichts-%).

Vorgenannte Werkstoffe werden vorzugsweise auf eine Vorwärmtemperatur von 1080 bis 1180°C gebracht und dann verschweißt. Das Abkühlen der verschweißten Formteile muß laut Herstellerangaben in ruhender Luft von Raumtemperatur stattfinden, um die mechanischen Eigenschaften der Werkstoffe nicht zu verändern. Gegebenenfalls sind der Abkühlung weitere Wärmebehandlungen vorzuschalten, wie zum Beispiel Altern, das meist bei einer Temperatur von 850°C durchgeführt wird.

Sollen Formteile mit unterschiedlichen Lösungsglühtemperaturen miteinander verschweißt werden, so wird vorteilhaft für die Bestimmung der Vorwärmtemperatur die höhere dieser Lösungsglühtemperaturen benutzt. Hierbei sind allerdings die weiter oben gegebenen allgemeinen Richtlinien für die Wahl dieser Temperaturen zu beachten.

Bestehen die zu verschweißenden Formteile aus Werkstoffen mit unterschiedlichen Vorschriften für das Abkühlen ggf. nach dem Lösungsglühen, so ist für das Abkühlen der Schweißzone und des angrenzenden Bereichs jene Vorschrift zu wählen, welche die strengeren Angaben enthält. In der Regel wird dies jene Vorschrift sein, welche eine langsamere Abkühlgeschwindigkeit angibt.

Das erfindungsgemäße Verfahren ist für das Verschweißen von Formteilen jeder Art geeignet, insbesondere jedoch auf das Verbinden von Heißteilen, insbesondere für Gasturbinen, zu Herstellungs- oder Reparaturzwecken. So können vorteilhaft Kopf- und/oder Fußteile an Turbinenschaufeln befestigt werden. Ein anderes wesentliches Anwendungsgebiet sind Reparaturen an solchen Heißteilen. Es lassen sich Risse ohne Festigkeitsverlust verschweißen und beschädigte Turbinenschaufeln durch das Einschweißen von neuen angepaßten Formteilen einwandfrei ausbessern.

Weitere Vorteile und Merkmale der Erfindung gehen aus der folgenden Beschreibung von Beispielen im Zusammenhang mit den schematischen Zeichnungen hervor. Darin zeigt

Fig. 1 einen mit dem erfindungsgemäßen Verfahren verschweißten Probestab in perspektivischer Darstellung, und

Fig. 2 den Ausschnitt aus einer Turbinenschaufel in perspektivischer Darstellung, in welcher im Bereich der Austrittskante ein Formteil zu Reparaturzwecken mit dem erfindungsgemäßen Verfahren eingesetzt wurde.

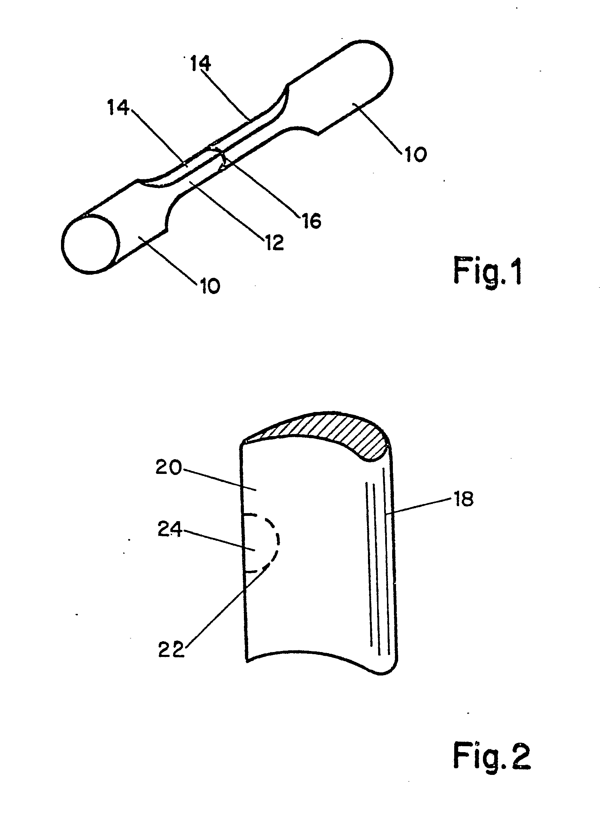

Aus einem Material, das Kohlenstoff 0,05 bis 0,15%, Silizium 0,5%, Kupfer 0,5%, Eisen 0,5%, Mangan 0,2%, Niob 0,6 bis 1,1%, Chrom 15,5 bis 16,5%, Titan 3,2 bis 3,7%, Aluminium 3,2 bis 3,7%, Kobalt 8,0 bis 9,0%, Molybdän 1,5 bis 2%, Schwefel 0,015%, Wolfram 2,4 bis 2,8%, Vanadium 1,5 bis 2%, Phosphor 0,15% und den Rest als Nickel enthält, wurden Probestäbe mit einer Form gemäß Fig. 1 hergestellt. Die Gesamtlänge betrug 120 mm, der Durchmesser der zylindrischen Endteile 10 war 16 mm. Zwischen den Endteilen 10 wiesen die Probestäbe einen flachen Bereich 12 auf, dessen Dicke 7 mm betrug. In diesen Bereich 12 wurden die Probestäbe quer zu ihrer Längsachse in zwei Hälften 14 getrennt und anschließend wieder verschweißt.

Hierzu wurden die Hälten 14 in einem Glühofen auf 1140°C erwärmt und zur gleichmäßigen Durchwärmung 20 Minuten auf dieser Temperatur gehalten. Nach dem Aneinanderstoßen der Schweißflächen 16 wurden die beiden Hälften durch einen Elektronenstrahl miteinander verschweißt. Die Leistung des Strahles betrug 0,7 kW bei einer Schweißgeschwindigkeit von 20 mm pro Sekunde. Die Verschweißung erfolgte hierbei in üblicher Weise in Vakuum, gegebenenfalls wäre auch eine Schutzgasatmosphäre im Zusammenhang mit Laserschweißungen denkbar.

Da der Hersteller des Werkstoffes, aus dem die Probestäbe hergestellt waren, nach dem Lösungsglühen ein Abkühlen in ruhender Luft von Raumtemperatur vorschreibt, wurden die Probestäbe unter diesen Bedingungen abgekühlt, wobei ein 24stündiges Altern bei 850°C nachgeschaltet wurde.

Eine anschließende Festigkeitsuntersuchung der Probestäbe bei 850°C ergab die in folgender Tabelle zusammengestellten repräsentativen Werte:

| | Streck-grenze, N/mm² | Zug-festigkeit, N/mm² |
|---|---|---|
| Grundwerkstoff | 538 | 714 |
| Geschweißtes Formteil | 544 | 656 |

Dieses Ergebnis ist als sehr gut zu bezeichnen, insbesondere wenn man bedenkt, daß nach eigenen Untersuchungen die Zugfestigkeit des Grundwerkstoffes eine Streubreite von ± 50 bis 70 N/mm² aufweist.

Auch die Wechselfestigkeit der geschweißten Probestäbe lag innerhalb des Streubereichs, der für den Grundwerkstoff ermittelt wurde. Nach eigenen Messungen werden bei einer Wechselbelastung (Zug-Druck) mit einer Belastungsamplitude von etwa 160 N/mm² und einer Frequenz von 10 Hertz etwa $1,5 \cdot 10^6$ Lastwechsel des Grundmaterials bis zum Bruch erreicht. Für die geschweißten Probestäbe waren unter gleichen Bedingungen etwa $3,8 \cdot 10^5$ bis $9 \cdot 10^5$ Lastwechsel bis zum Bruch erforderlich. Dieses Resultat kann ebenfalls als sehr gut bezeichnet werden, denn der Streubereich für die Wechselfestigkeit des Grundwerkstoffes liegt bei der oben angegebenen Wechselbelastung zwischen etwa $1 \cdot 10^5$ und $2 \cdot 10^6$ Lastwechseln.

Durch das Vorwärmen der Formteile auf die genannten Temperaturen ergeben sich sehr geringe Temperaturunterschiede während des Schweißens. Untersuchungen ergaben neben der Schweißzone einen Temperaturgradienten von nur etwa 50° C/mm. Der entsprechende Temperaturgradientunterschied beim Verschweißen bei einer Vorwärmtemperatur von 20° C beträgt etwa 500° C/mm.

Durch die geringeren Temperaturunterschiede ergibt sich ein feinkörniges Erstarrungsgefüge der Schweißnaht, mit der Folge günstiger Festigkeitswerte.

Metallurgische Untersuchungen des Schweißnahtbereiches ergaben keinerlei Risse oder Poren, dagegen eine Schweißnaht mit optimalem Erstarrungsgefüge.

In Fig. 2 ist der Ausschnitt aus einer Turbinenschaufel 18 in perspektivischer Ansicht dargestellt. Da die Austrittskante 20 beschädigt war, wurde der beschädigte Bereich 22 in Form eines Halbkreises ausgeschnitten und ein entsprechendes Ersatzteil 24 eingepaßt.

Da die Turbinenschaufel 18 und das Ersatzteil 24 aus einem Werkstoff bestand, der Kohlenstoff 0,15%, Chrom 22,4%, Kobalt 19,0%, Wolfram 2,0%, Niob 1,0%, Tantal 1,4%, Titan 3,7%, Aluminium 1,9%, Zirkonium 0,1%, Bor 0,009% und den Rest als Nickel enthält und dessen Lösungsglühtemperatur bei 1160° C liegt, wurde eine Erwärmung auf 1180° C vorgenommen und zur gleichmäßigen Durchwärmung etwa 20 Minuten aufrechterhalten. Nachdem die zu verschweißenden Flächen aneinandergestoßen waren, wurde mit einem Elektronenstrahl verschweißt, der eine Strahlstärke von maximal 1,0 kW bei einer Schweißgeschwindigkeit von 20 mm pro Sekunde aufwies. Maximale Dicke der Schaufel: 20 mm.

Der Elektronenstrahl verlief hierbei wie auch im Beispiel nach Fig. 1, in Richtung der zu verschweißenden Flächen quer durch die Bauteile. Da sich die Dicke der Verschweißung mit dem Profil der Turbinenschaufel ändert, wurde die Strahlintensität an diese Dickenänderung angepaßt und für eine günstige Verschweißung der Strahl in Wedelform geführt.

Nach dem Verschweißen wurde die Schaufel entsprechend den Vorschriften des Werkstoffherstellers gealtert und in ruhender Luft von Raumtemperatur abgekühlt. Anschließende Gefügeuntersuchungen bestätigen die Erwartungen: es zeigten sich keinerlei Risse oder Poren im Schweißbereich.

Der weiter oben durch seine Nominalzusammensetzung beschriebene Werkstoff, aus dem die Probestäbe hergestellt waren, ist unter der Bezeichnung IN 738 LC bekannt und hat eine Lösungsglühtemperatur von 1120° C.

Die Härte der geschweißten Probestäbe war gleichmäßig. Härtemessungen quer zur Schweißnaht ergaben sowohl im Bereich der Schweißnaht als auch in angrenzenden Bereichen eine Vickers-Härte (HV), die gleichbleibend zwischen den Werten 485 HV 0,1 und 515 HV 0,1 lag.

Der Werkstoff, aus dem die Turbinenschaufel gemäß Bild 2 hergestellt war und dessen Nominalzusammensetzung weiter oben angegeben wurde, ist unter der Bezeichnung IN 939 bekannt.

Sämtliche Prozentangaben im Zusammenhang mit den Werkstoffzusammensetzungen sind Gewichtsprozente.

## Patentansprüche

1. Verfahren zum rißfreien Energiestrahlschweißen von warmfesten Formteilen, die vor dem Verschweißen auf eine Vorwärmtemperatur erwärmt und deren sich berührende Schweißflächen anschließend mit dem Energiestrahl geschmolzen und verschweißt werden, dadurch gekennzeichnet, daß bei warmfesten Formteilen aus Superlegierungen mit gleichen oder unterschiedlichen Lösungsglühtemperaturen die Schweißzone und ein angrenzender Bereich von ausreichender Größe auf eine Vorwärmtemperatur erwärmt werden, welche in Abhängigkeit von der jeweils höchsten Lösungsglühtemperatur so gewählt wird, daß sie über oder nur geringfügig unter dieser Lösungsglühtemperatur, welche zwischen 1000 und 1250° C liegt, daß die Formteile bis zum Temperaturausgleich oder mindestens weitgehenden Temperaturausgleich innerhalb der Schweißzone und des angrenzenden Bereichs auf dieser Vorwärmtemperatur gehalten werden, und daß die Schweißzone sowie der angrenzende Bereich nach dem Schmelzen und dem Verschweißen der Schweißflächen gleichmäßig gekühlt werden.

2. Verfahren nach Anspruch 1, dadurch gekennzeichnet, daß die Formteile insgesamt auf die Vorwärmtemperatur erwärmt werden.

3. Verfahren nach Anspruch 1 oder 2, dadurch gekennzeichnet, daß Formteile aus Superlegierungen auf der Basis von Nickel oder Kobalt verwendet werden.

4. Verfahren nach einem der Ansprüche 1 bis 3, dadurch gekennzeichnet, daß Formteile aus einer Superlegierung, die 24 Gew.-% Chrom, 11 Gew.-% Molybdän, 2 Gew.-% Niob, 7 Gew.-% Tantal und Niob, 22 Gew.-% Kobalt, 6 Gew.-% Titan, 7 Gew.-% Aluminium, 0,5 Gew.-% Kohlenstoff, 0,2 Gew.-% Beryllium, 0,3 Gew.-% Zirkonium, 2 Gew.-% Hafnium, 6 Gew.-% Eisen und 12 Gew.-% Wolfram enthält, auf eine Vorwärmtemperatur von 1080 bis 1180° C erwärmt werden.

5. Anwendung des Verfahrens nach einem der vorangegangenen Ansprüche auf das Verbinden von Turbinen-Heißteilen für Herstellungs- oder Reparatur-Zwecke.

## Claims

1. A method for flawless energy beam welding of heat-resistant shaped parts, which, before welding, are heated up to a preheating temperature and whose welding surfaces, which are in contact with each other, are subsequently melted and welded by the energy beam, characterized in that in the case of heat-resistant shaped parts made of super alloys with equal or different solution heat teatment temperatures, the welding area and an adjacent area of adequate size are heated up to a preheating temperature, which, in dependence on the highest solution heat treatment temperature in each case, is selected so that it lies above or only slightly below this solution heat treatment temperature, which is between 1000 and 1250°C, in that the shaped parts are maintained at this preheating temperature until the temperature is equalized or at least substantially equalized inside the welding area and the adjacent area, and in that the welding area and the adjacent area are cooled uniformly after melting and welding the welding surfaces.

2. A method according to claim 1, characterized in that the shaped parts are heated up as a whole to the preheating temperature.

3. A method according to claim 1 or 2, characterized in that shaped parts made of super alloys based on nickel or cobalt are used.

4. A method according to one of claims 1 to 3, characterized in that shaped parts made of a super alloy which contains 24% by weight chromium, 11% by weight molybdenum, 2% by weight niobium, 7% by weight tantalum and niobium, 22% by weight cobalt, 6% by weight titanium, 7% by weight aluminium, 0,5% by weight carbon, 0,2% by weight beryllium, 0,3% by weight zirconium, 2% by weight hafnium, 6% by weight iron and 12% by weight tungsten, are heated up to a preheating temperature of 1080 to 1180°C.

5. Use of the method according to one of the preceding claims in connecting turbine hot parts for purposes of manufacture or repair.

**Revendications**

1. Procédé de soudage à rayonnement d'énergie, sans fissure, de pièces moulées résistant à la chaleur qui, avant le soudage, sont chauffées à une température de préchauffage et dont les faces de soudage qui se touchent sont ensuite fondues par le rayonnement énergétique et soudées, caractérisé en ce que, lorsqu'il s'agit de pièces moulées résistant à la chaleur en superalliages ayant des températures de recuit de mise en solution, identiques ou différentes, la zone de soudage et une zone avoisinante de grandeur suffisante sont chauffées à une température de préchauffage qui est choisie de telle manière, en fonction de la température respectivement la plus élevée de recuit de mise en solution, qu'elle se trouve au-dessus ou seulement très peu en dessous de cette température de recuit de mise en solution qui est située entre 1000 et 1250°C, en ce que les pièces moulées sont maintenues à cette température de préchauffage jusqu'à l'équilibre de température ou au moins un large équilibre de température à l'intérieur de la zone de soudage et de la zone avoisinante, et en ce que la zone de soudage ainsi que la zone avoisinante sont refroidies uniformément après la fusion et le soudage des faces de soudage.

2. Procédé selon la revendication 1, caractérisé en ce que les pièces moulées sont chauffées en totalité à la température de préchauffage.

3. Procédé selon la revendication 1 ou la revendication 2, caractérisé en ce qu'on utilise des pièces moulées en superalliages à base de nickel ou de cobalt.

4. Procédé selon l'une des revendications 1 à 3, caractérisé en ce qu'on chauffe à une température de préchauffage de 1080 à 1180°C des pièces moulées en un superalliage qui contient 24% en poids de chrome, 11% en poids de molybdène, 2% en poids de niobium, 7% en poids de tantale et de niobium, 22% en poids de cobalt, 6% en poids de titane, 7% en poids d'aluminium, 0,5% en poids de carbone, 0,2% en poids de béryllium, 0,3% en poids de zirconium, 2% en poids de hafnium, 6% en poids de fer et 12% en poids de tungstène.

5. Utilisation de procédé selon l'une des revendications précédentes pour relier des pièces chaudes de turbine dans des buts de fabrication ou de réparation.

Fig.1

Fig.2